# EUROPÄISCHE PATENTSCHRIFT

(11) **EP 1 829 161 B1**
(45) Veröffentlichungstag und Bekanntmachung des Hinweises auf die Patenterteilung: **21.05.2008**
(21) Anmeldenummer: 05810614.7
(22) Anmeldetag: 18.11.2005
(51) Int. Cl.: H01R 3/00, H01M 2/10, E05B 19/04

(54) **HALTE-UND KONTAKTIERVORRICHTUNG FUER EINE KNOPFZELLE UND VERFAHREN ZUR HERSTELLUNG EINER SOLCHEN**
MAINTAINING AND CONTACTING DEVICE FOR A ROUND CELL BATTERY AND METHOD FOR THE PRODUCTION THEREOF
DISPOSITIF DE MAINTIEN ET DE CONTACT POUR PILES RONDES, ET SON PROCEDE DE PRODUCTION

(30) Priorität: 23.11.2004 EP 04027809
(43) Veröffentlichungstag der Anmeldung: 05.09.2007
(73) Patentinhaber: Huf Hülsbeck & Fürst GmbH & Co. KG, 42551 Velbert (DE)
(72) Erfinder: HABECKE, Matthias, 45529 Hattingen (DE)
(86) Internationale Anmeldenummer: PCT/EP2005/012372
(87) Internationale Veröffentlichungsnummer: WO 2006/056369

(56) Entgegenhaltungen:
- US-A- 4 487 820
- US-A- 5 980 309
- US-B1- 6 182 484
- US-B1- 6 436 569

## Beschreibung

Die vorliegende Erfindung betrifft eine Halte- und Kontaktiervorrichtung für eine Knopfzelle, insbesondere die Verwendung einer solchen Halte- und Kontaktiervorrichtung in Fernbedienungsvorrichtungen zum Entriegeln/Verriegeln von Kraftfahrzeugen, wobei die Kontaktiervorrichtung zur elektrischen Energieversorgung der Elektronik einer solchen Fernbedienungseinrichtung dient.

Bekannte elektronischer Schlüssel weisen in der Regel zur Energieversorgung des Elektronikteils mit seinem Sender und Empfängerbausteinen Kopfzellen auf, die Teils direkt mittels Haltevorrichtungen auf Platinen der Elektronikelemente gehalten werden. Aufgrund der Problematik, dass bei einem Batteriewechsel der Bediener aus Versehen die nach Demontage des Schlüssels frei liegende Elektronik beschädigen kann, beispielsweise durch mechanische Beeinträchtigung oder elektrostatische Beeinträchtigung, werden die elektronischen Bereiche mittels gehäuseförmiger Batteriehalter abgeschirmt. Beim Wechsel einer Knopfzelle hat der Bediener nur Zugriff auf das Batteriegehäuse.

Knopfzellen weisen eine Ober- und Unterseite aus, die auch zur Energieübertragung dienen, wobei jede Seite einen bestimmten Pol darstellt. Zusätzlich können die vorstehenden Seiten zur Kontaktierung eines Pols genutzt werden.

Aus der DE 34 19 333 ist ein solches halboffenes Gehäuse bekannt. Die Kontaktierung erfolgt mittels elektrischen Kontakte, die durch den Gehäuseboden zum Elektrobauteil geführt werden. Die elektrischen Kontakt werden dabei von der offenen Seite des Gehäuses eingesetzt und mit der Platine verlötet.
Im Rahmen der Massenfertigung von elektronischen Schlüsseln für Kraftfahrzeuge ist diese Montageform aufwendig und teuer.

Der vorliegenden Erfindung liegt somit die Aufgabe zugrunde den Aufbau einer Halte - und Kontaktiervorrichtung, insbesondere zur Anwendung in Fernbedienungsvorrichtungen zum Verriegeln/Entriegeln von Schlössern und Verschlüssen von Kraftfahrzeugen so zu gestalten, daß eine einfache Montage der Haltevorrichtung an sich und der späteren Montage in der Fernbedienungsvorrichtung ermöglicht wird.

Diese Aufgabe wird durch die im Anspruch 1 aufgeführten Merkmale gelöst.

Die Unteransprüche 2 bis 11 zeigen vorteilhafte Ausführungsformen und Weiterbildungen auf.

Die Ansprüche 12 und 13 kennzeichnet eine Fernbedienungsvorrichtung die erfindungsgemäße Halte- und Kontaktiervorrichtungen für eine Knopfzelle aufweisen und ist auf die elektrische Verbindung zwischen der Elektrobaugruppe und der Knopfzelle gerichtet.

Anspruch 14 ist auf ein Verfahren zum Herstellen einer erfindungsgemäßen elektrischen Verbindung gerichtet.
Anspruch 15 ist eine vorteilhafte Weitergestaltung des Verfahrens.

In den Zeichnungen ist die Erfindung schematisch in einem Ausführungsbeispiel ausgeführt:

Es zeigen:
- Fig.1:: Eine perspektivische Ansicht einer Fernbedienungseinrichtung zum Verriegeln/Entriegeln von Schlössern und Verschlüssen an Kraftfahrzeugen Knopfzelle im Schnitt
- Fig.3:: Eine perspektivische Ansicht der Vorrichtung von der Unterseite
- Fig. 4:: Einen Querschnitt A-A durch die Haltevorrichtung
- Fig. 5:: Eine perspektivische Ansicht des ersten Kontaktelementes
- Fig. 6:: Eine perspektivische Ansicht des zweiten Kontaktelementes

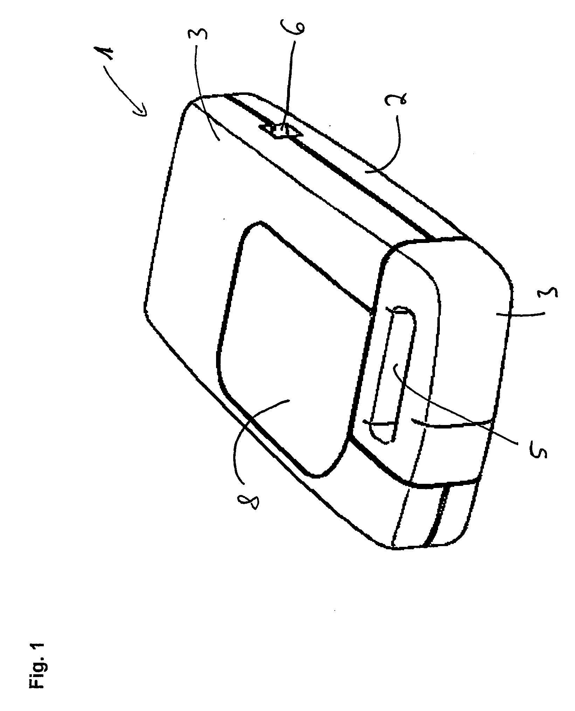

Figur 1 zeigt eine Fernbedienungsvorrichtung 1 zum Verriegeln oder Entriegeln von Schlössern und Verschlüssen an Kraftfahrzeugen in einer perspektivischen Ansicht in montierter Form. Dieser elektronische Schlüssel 1 besteht aus einer Oberschale 2 und einer Unterschale 3 sowie einem eingeschobenen mechanischen Notschlüssel 4. Der Notschlüssel 4 weist in seinem Griffteil eine Ausnehmung 5 zur Verwendung als Schlüsselaufhänger auf. Der Notschlüssel kann bei Betätigung einer Taste oder Schiebers, der auf der Vorderseite des elektronischen Schlüssels 1 oder der Notschlüssels angeordnet ist, entriegelt werden, so daß dieser im Notfall, z.B. bei Energieausfall am Fahrzeug, der Fernbedienungsvorrichtung 1 entnommen werden kann. Damit würde dann ein am Fahrzeug befindlicher Notschließzylinder getätigt, um ohne Funkkommunikation in das Fahrzeug zu gelangen, um Probleme zu beseitigen.

Auf der Oberschale der Fernbedienungsvorrichtung 1 befinden sich entsprechende Taster, mit deren Betätigung die gewünschten Funktionen, wie Öffnen oder Verriegeln des Fahrzeugs ausgelöst werden. Des weiteren befinden sich innerhalb der Oberschale 2 und Unterschale 3 die notwendige Elektronik, wie Antennen, Sender und Empfängerbausteine und ggf. Auswerteeinheiten zum Erstellen und Bearbeiten von Codesignalen. automatischen Öffnen eines Kraftfahrzeuges bei bloßer Annäherung an das Fahrzeug benutzt werden. Die Annäherung wird von Sensoren am Fahrzeug detektiert, wodurch die Codekommunikation zwischen der Fernbedienungsvorrichtung 1 und dem Kraftfahrzeug initiiert wird. Nach erfolgreichem Austausch des Codes wird beispielsweise durch die Steuereinheit des Fahrzeugs das Entriegeln der Türschlösser veranlaßt.

Die Fernbedienungsvorrichtung wird im Fahrzeug üblicherweise als berechtigendes Element in einen Zündanlaßschalter, z.B. im Armaturenbereich des Fahrzeuges, eingebracht. Zur Verrastung des elektronischen Schlüssels 1 weist dieser Rastvertiefungen 5 an den Seitenflächen auf.

In der Unterschale 3 ist eine Halte- und Kontaktiervorrichtung 7 integriert. Dies stellt das Gehäuse dar. Sie wird von außen von einem Batteriefachdeckel 8 abgedeckt. Nach Entnahme des Notschlüssels 3 kann der Batteriefachdeckel 8 in einfacher Weise abgenommen werden, um die Knopfzellen tauschen zu können.

Oberschale und Unterschale werden mittels üblicher Verbindungsverfahren nach Komplettierung mit Elektronik und sonstigen notwendigen Bauteilen zusammengefügt, beispielsweise durch Verkleben, Reibschweißen oder Verrasten.

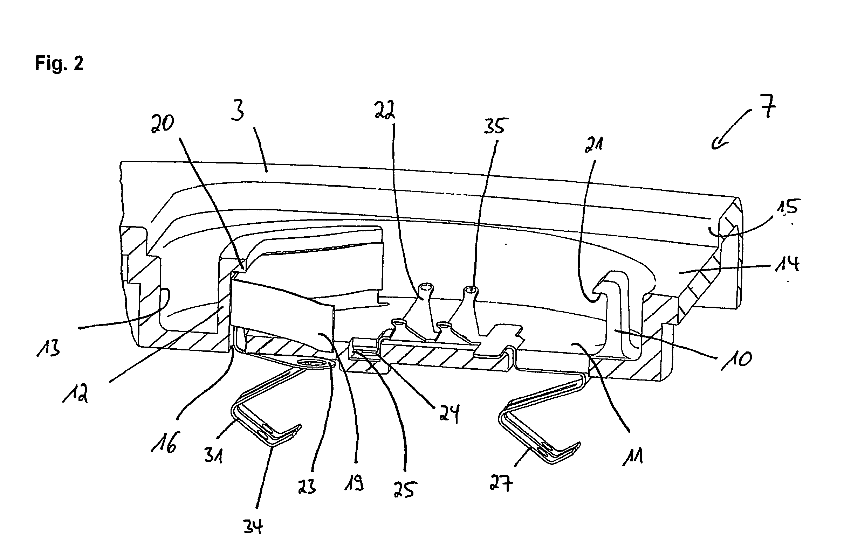

Figur 2 zeigt den Teilbereich der Unterschale 3 mit der integrierten Halte- und Kontaktiervorrichtung 7 zur Aufnahme einer Knopfzelle zur elektrischen Stromversorgung der Elektronikbaugruppe, die in der Oberschale angeordnet ist.

Die Halte- und Kontaktiervorrichtung 3 ist mit der Aufnahmewanne 9 einteilig ausgeführt.
Die Teile bestehen aus Kunststoff und werden im Kunststoffspritzgießverfahren in einem Prozeß hergestellt. In der Aufnahmewanne 9 ist ein federnder Haltehaken 10 angeordnet, der einteilig aus dem Boden 11 der Aufnahmewanne 9 herausgebildet ist.

Des weiteren ist gegenüber dem elastischen Haltehaken 10 eine orthogonal zum Wannenboden 11 stehende Haltewand angeordnet, die auch aus dem Boden 11 mit der Wannenwand 13 decken. Die Haltewand 12 ist C-förmig angeordnet, so daß diese einen radialen Teil einer Knopfzelle umfaßt und damit als Widerlager gegen die durch den Haltehaken 10 auf die Kopfzelle wirkende Vorspannkraft wirkt. Die Haltewand weist am oberen Ende einen zum Zentrum der Aufnahmewanne 9 gerichteten Vorsprungkante auf, die eine eingesetzte Knopfzelle formschlüssig in der Aufnahmewanne 9 hält. Eine eingesetzte Knopfzelle wird somit formschlüssig durch die Vorsprungkante 20 und den Hakenvorsprung 21 gehalten.
Über Federkontaktelemente 22 eines ersten Kontaktelementes 18 wird eine eingesetzte Knopfzelle gegen die Vorsprungkante 20 und den Hakenvorsprung 21 vorgespannt. damit ist eine sichere Kontaktierung zur Knopfzelle realisiert und die Knopfzelle genügend sicher positioniert.

Zur Entnahme einer Knopfzelle wird der elastische Haltehaken 10 in Richtung zur nächstliegenden Wannenwand 13 gebogen. Der Formschluß wird aufgehoben und die Knopfzelle kann bei abgenommenem Batteriefachdeckel herausgenommen werden. Der Batteriefachdeckel liegt auf der Fläche 14 auf und wird von der Seitenfläche 15 eingefaßt.

Im Boden 11 der Halte- und Kontaktiervorrichtung 7 ist eine längliche schlitzförmige Bodenausnehmung 16 vorgesehen, die sich entlang der Haltewand erstreckt. Die schlitzförmige Bodenausnehmung 16 ist auf der zur Mitte Aufnahmewanne 9 gerichteten Seite der Wannenwand angeordnet. Sie dient dazu ein erstes Kontaktelement montieren zu können.
Dazu werden die Kontaktfahnen zur seitlichen Kontaktierung eine Knopfzelle von der der Haltewand 12 abgewandten Seite des Bodens 11 der Halte- und Kontaktiervorrichtung 7 durch den Schlitz 16 in den Innenbereich der Wannenwand 13 geschoben und von unten befestigt.

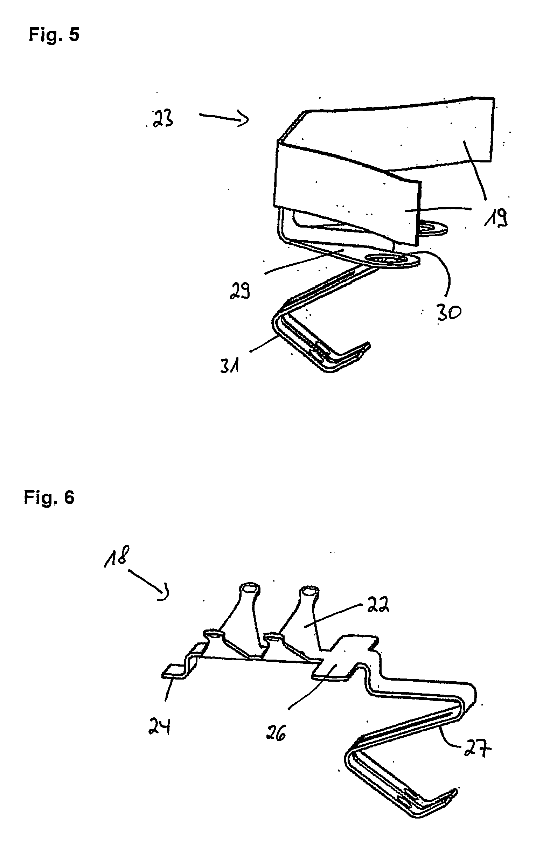

In Figur 6 ist das erste Kontaktelement 18 als Einzelteil dargestellt. Es handelt sich um ein vorgebogenes Blattfederelement. Der Aufbau beginnt mit einem Befestigungsvorsprung 24, der nach Montage des Kontaktelementes in eine Vertiefung 25 einspringt. Dadurch wird eine Rückbewegung, d.h. Demontage des Kontaktelementes 18 aus der Betriebsposition unmöglich gemacht. der Knopfzelle unter einer definierten Federkraft in Kontakt stehen.
Danach schließt sich eine Auflageplatte 26 an, mit der sich das Kontaktelement zusätzlich großflächig gegen den Boden 11 der Vorrichtung 7 abstützen kann. Im Anschluß folgt ein S-förmig gebogener Federblechabschnitt 27, der im eingebauten Zustand durch eine 2. Ausnehmung 28 den Kontakt zur Elektronikbaugruppe der Fernbedienungsvorrichtung 1 bildet.

In Figur 5 ist das zweite Kontaktelement 23 gezeigt, das zwei großflächige Kontaktfahnen 19 aufweist, mit denen die Seitenflächen der Knopfzelle kontaktiert werden.
Dieser Bereich wird von der unteren Seite des Bodens 11 in den Innenbereich der Aufnahmewanne 9 eingebracht bis die Auflageabschnitte 29 an Außenseite der Aufnahmewanne 9 anliegen. Durch die Lochausnehmungen 30 ragt dann ein kleiner Materialvorsprung der Aufnahmewanne 9, der im Anschluß des Einsetzens mittels eines Prägestempels heiß verprägt wird, so daß das Kunststoffmaterial 32 den Auflageabschnitt umschließt und damit das zweite Kontaktelement formschlüssig in der Einbauposition sichert.
Im Anschluß an den Auflageabschnitt 29 erstreckt sich, wie beim ersten Kontaktelement 23 ein s-förmig gebogener Federblechabschnitt 31 zur Kontaktierung der Elektronikbaugruppe.

Beide Kontaktelemente 18, 23 sind vorgebogene Bauteile, die in Aufnahmewanne 9 eingesetzt werden. Durch Verwendung solcher Bauteile entfällt der sonst übliche und aufwendige Biegevorgang von Kontaktfederblechabschnitten im eingebauten Zustand. Gerade bei den Massenstückzahlen im Automobilbereich kann dadurch eine Halte- und Kontaktiervorrichtung wirtschaftlich hergestellt werden.

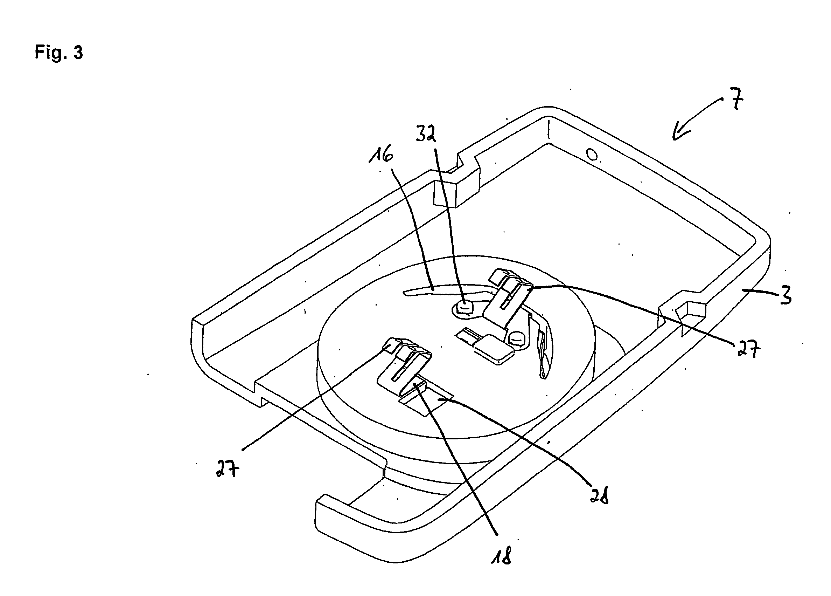

Figur 3 zeigt eine perspektivische Ansicht der fertig vornotierten Unterschale 3 von der Unterseite. Der Federblechabschnitt 27 des 1. Kontaktelementes ist durch die 2. Ausnehmung 28 im Boden 11 Aufnahmewanne 9 von der Innenseite der Aufnahmewanne 9 hindurch gesteckt und seitlich in die dargestellte Position verschoben worden.

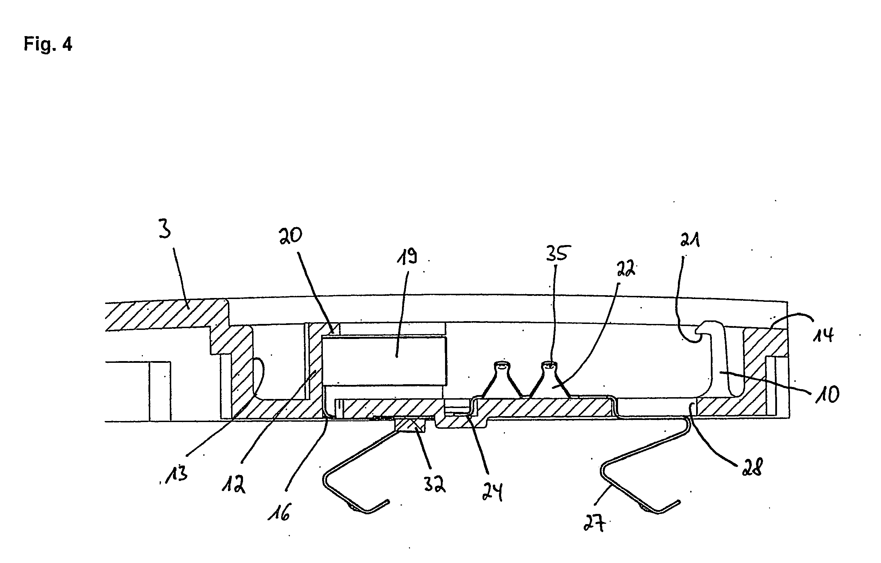

Figur 4 zeigt zur Verdeutlichung die Unterschale 3 im vornotierten Zustand im Schnitt.

## Patentansprüche

1. Halte- und Kontaktiervorrichtung für eine Knopfzelle, die ein nach oben offenes Gehäuse 3 aus Kunststoff aufweist und darin Kontaktelemente 18,23 zur Kontaktierung der,Kopfzellenpole angeordnet sind, wobei die Kontaktelemente 18, 23 durch mindestens eine Ausnehmung 16 im Boden 11 des Gehäuses 3 aus dem Gehäuse 3 heraus geführt sind, um dort den Kontakt zur eine Elektronikbaugruppe herzustellen, **dadurch gekennzeichnet, dass** die Kontaktelemente 18, 23 außerhalb des Gehäuses eine kraftschlüssige Verbindung zu einer Elektronikbaugruppe bilden.

2. Vorrichtung nach Anspruch 1, **dadurch gekennzeichnet, dass** die Kontaktelemente 13, 23 Blattfederelemente sind.

3. Vorrichtung nach Anspruch 2, **dadurch gekennzeichnet, dass** die Kontaktelemente 18, 23 im Endbereich zur Kontaktierung der Elektronikbaugruppe S-förmig gebogen ist, um gute federnde Eigenschaften zu erreichen.

4. Vorrichtung nach einem der vorhergehenden Ansprüche, **dadurch gekennzeichnet, dass** die Knopfzellenkontaktfläche 33 und die Elektronikkontaktfläche 34 mindestens eines Kontaktelementes 18, 23 orthogonal zueinander stehen.

5. Vorrichtung nach einem der vorhergehenden Ansprüche, **dadurch gekennzeichnet, dass** mindestens eine Ausnehmung 16, 28 im Bodenbereich 11 des Gehäuses 3 schlitzförmig ist.

6. Vorrichtung nach Anspruch 5, **dadurch gekennzeichnet, dass** der Schlitz sich über eine Teilbereich entlang einer Stützwand 12 erstreckt.

7. Vorrichtung nach einem der Ansprüche von 4 bis 6, **dadurch gekennzeichnet, dass** ein zweites Kontaktelement 18 mit seinem Polkontaktteil 27 von der Innenseite des Gehäuses 3 durch eine Ausnehmung 28 im Bodenbereich 9 des Gehäuses 3 geführt ist.

8. Vorrichtung nach einem der Ansprüche von 4 bis 7, **dadurch gekennzeichnet, dass** mindestens ein Kontaktelemente 18, 23 zur Fixierung mit dem Kunststoff 32 des Bodenteils 9 verprägt ist.

9. Vorrichtung nach Anspruch 7, **dadurch gekennzeichnet, dass** das zweite Kontaktelement 18 formschlüssig in Position gehalten wird.

10. Vorrichtung nach einem der vorhergehenden Ansprüche, **dadurch gekennzeichnet, dass** im die Knopfzelle aufnehmenden Innenbereich federnde Haltelemente 10 zur Halterung der eingesetzten Knopfzelle integriert sind.

11. Vorrichtung nach Anspruch 10, **dadurch gekennzeichnet, dass** das Halteelement ein federnder Haken10 ist, der aus dem Boden 9 des Gehäuses ragt.

12. Fernbedienungsvorrichtung zum Verriegeln/Entriegeln von Schlössern und Verschlüssen an Kraftfahrzeugen, **dadurch gekennzeichnet, dass** die Fernbedienungsvorrichtung 1 mindestens eine Halte- und Kontaktiervorrichtung für eine Knopfzelle nach einem der vorhergehenden Ansprüche aufweist.

13. Fernbedienungsvorrichtung nach Anspruch 12, **dadurch gekennzeichnet, dass** unter der Halte- und Kontaktierungsvorrichtung 7 eine Elektronikbaugruppe angeordnet ist und darauf die Gegenkontaktstellen zur Kontaktierung der Kontaktelemente der Batterie angeordnet sind, wobei die Elektronikkontaktfläche im Einbauzustand gegen die Gegenkontaktstelle gepreßt ist.

14. Verfahren zur Herstellung einer Halte-und Kontaktiervorrichtung 1 für eine Knopfzelle mit einem nach oben offenen Gehäuse 3 und durch das Bodenteil verlaufende Kontaktelementen 18, 23 **gekennzeichnet durch** die folgenden Schritte:
- Herstellen eines nach oben offenen Gehäuses 3 mit seinen Aussparungen 16, 28 aus Kunststoff im Spritzgießtechnologie,
- Herstellen von vorgebogenen Kontaktelementen 18, 23,
- Einsetzen der Kontaktelemente 18, 23 in beliebiger Reihenfolge, wobei mindestens ein Kontaktelement 18, 23 von der abgewandten Seite des Knopfzellen aufnehmenden Gehäuseinnenteils **durch** Ausnehmungen 16, 28 im Boden einsetzt wird.

15. Verfahren nach Anspruch 12, **dadurch gekennzeichnet, dass** das mindestens ein Kontaktelement mit dem Gehäuseboden 9 verprägt wird.

## Claims

1. A holding and contact-making apparatus for a button cell, which has a housing 3 which is open at the top and is composed of plastic, and contact elements 18, 23 are arranged in it in order to make contact with the button cell poles, with the contact elements 18, 23 being passed out of the housing 3 through at least one recess 16 in the bottom 11 of the housing 3, in order to make the contact with an electronics assembly there, **characterized in that** the contact elements 18, 23 form a force-fitting connection to an electronics assembly outside the housing.

2. The apparatus as claimed in claim 1, **characterized in that** the contact elements 18, 23 are leaf-spring elements.

3. The apparatus as claimed in claim 2, **characterized in that** the contact elements 18, 23 are bent in an S-shape in the end area in order to make contact with the electronics assembly and in order to achieve good spring characteristics.

4. The apparatus as claimed in one of the preceding claims, **characterized in that** the button cell contact pad 33 and the electronics contact pad 34 of at least one contact element 18, 23 are at right angles to one another.

5. The apparatus as claimed in one of the preceding claims, **characterized in that** at least one recess 16, 28 in the bottom area 11 of the housing 3 is in the form of a slot.

6. The apparatus as claimed in claim 5, **characterized in that** the slot extends over a subarea along a supporting wall 12.

7. The apparatus as claimed in one of claims 4 to 6, **characterized in that** the pole contact part 27 of a second contact element 18 is passed from the inside of the housing 3 through a recess 28 in the bottom area 9 of the housing 3.

8. The apparatus as claimed in one of claims 4 to 7, **characterized in that** at least one of the contact elements 18, 23 is stamped into the plastic 32 of the bottom part 9 for fixing.

9. The apparatus as claimed in claim 7, **characterized in that** the second contact element 18 is held in position in an interlocking manner.

10. The apparatus as claimed in one of the preceding claims, **characterized in that** sprung holding elements 10 are integrated in the internal area, which holds the button cell, in order to hold the inserted button cell.

11. The apparatus as claimed in claim 10, **characterized in that** the holding element is a sprung hook 10 which projects out of the bottom 9 of the housing.

12. A remote-control apparatus for locking/unlocking of locks and closures on motor vehicles, **characterized in that** the remote-control apparatus 1 has at least one holding and contact-making apparatus for a button cell as claimed in one of the preceding claims.

13. The remote-control apparatus as claimed in claim 12, **characterized in that** an electronics assembly is arranged under the holding and contact-making apparatus 7, and the mating contact points for making contact with the contact elements of the battery are arranged thereon, with the electronics contact pad being pressed against the mating contact point in the installed state.

14. A method for production of a holding and contact-making apparatus 1 for a button cell having a housing 3 which is open at the top and having contact elements 18, 23 which pass through the bottom part, **characterized by** the following steps:
- production of a housing 3, which is open at the top, with its cutouts 16, 28, composed of plastic, using injection-molding technology,
- production of prebent contact elements 18, 23,
- insertion of the contact elements 18, 23 in any desired sequence, with at least one contact element 18, 23 being inserted through recesses 16, 28 in the bottom from the averted face of the housing inner part which holds the button cells.

15. The method as claimed in claim 12, **characterized in that** the at least one contact element is stamped into the housing bottom 9.

## Revendications

1. Dispositif de retenue et d'établissement de contact pour une pile ronde, qui présente un boîtier (3) ouvert vers le haut en matière synthétique et des éléments de contact (18, 23) pour l'établissement de contact des pôles de la pile étant disposés à l'intérieur, les éléments de contact (18, 23) étant guidés par au moins un évidement (16) dans le fond (11) du boîtier (3) à la sortie du boîtier (3), afin d'établir le contact avec un ensemble d'électronique, **caractérisé en ce que** les éléments de contact (18, 23) forment à l'extérieur du boîtier une liaison par adhérence de force avec un ensemble d'électronique.

2. Dispositif selon la revendication 1, **caractérisé en ce que** les éléments de contact (13, 23) sont des éléments de ressort à lame.

3. Dispositif selon la revendication 2, **caractérisé en ce que** les éléments de contact (18, 23) sont pliés en S dans la zone d'extrémité pour l'établissement du contact avec l'ensemble d'électronique, afin d'obtenir de bonnes propriétés d'élasticité.

4. Dispositif selon l'une quelconque des revendications précédentes, **caractérisé en ce que** la surface de contact de la pile ronde (33) et la surface de contact d'électronique (34) d'au moins un élément de contact (18, 23) sont perpendiculaires entre elles.

5. Dispositif selon l'une quelconque des revendications précédentes, **caractérisé en ce qu'**au moins un évidement (16, 28) dans la zone de fond (11) du boîtier (3) est en forme de fente.

6. Dispositif selon la revendication 5, **caractérisé en ce que** la fente s'étend sur une zone partielle le long d'une paroi de soutien (12).

7. Dispositif selon l'une quelconque des revendications 4 à 6, **caractérisé en ce qu'**un second élément de contact (18) est guidé avec sa partie de contact de pôle (27) à partir du côté intérieur du boîtier (3) par un évidement (28) dans la zone de fond (9) du boîtier (3).

8. Dispositif selon l'une quelconque des revendications 4 à 7, **caractérisé en ce qu'**au moins un élément de contact (18, 23) est gaufré pour la fixation avec la matière synthétique (32) de la partie de fond (9).

9. Dispositif selon la revendication 7, **caractérisé en ce que** le second élément de contact (18) est maintenu en position par complémentarité de forme.

10. Dispositif selon l'une quelconque des revendications précédentes, **caractérisé en ce que** des éléments de retenue (10) élastiques pour la fixation de la pile ronde utilisée soient intégrés dans la zone intérieure recevant la pile ronde.

11. Dispositif selon la revendication 10, **caractérisé en ce que** l'élément de retenue est un crochet (10) élastique, qui dépasse du fond (9) du boîtier (3).

12. Dispositif de télécommande pour le verrouillage/déverrouillage de serrures et de fermetures sur des véhicules automobiles, **caractérisé en ce que** le dispositif de télécommande (1) présente au moins un dispositif de retenue et d'établissement de contact pour une pile ronde selon l'une quelconque des revendications précédentes.

13. Dispositif de télécommande selon la revendication 12, **caractérisé en ce qu'**un groupe d'électronique est disposé au-dessous du dispositif de retenue et d'établissement de contact (7) et les points de contre-contact pour l'établissement du contact avec les éléments de contact de la batterie sont disposés dessus, la face de contact d'électronique étant pressée contre le point de contre-contact dans l'état de montage.

14. Procédé pour fabriquer un dispositif de retenue et d'établissement de contact (1) pour une pile ronde comprenant un boîtier (3) ouvert le haut et des éléments de contact (18, 23) passant par la partie de fond, **caractérisé par** les étapes suivantes :
- fabrication d'un boîtier (3) ouvert vers le haut avec ses évidements (16, 28) à base de matière synthétique dans la technologie de moulage par injection,
- fabrication d'éléments de contact (18, 23) pré-coudés,
- insertion des éléments de contact (18, 23) dans un ordre de succession quelconque, au moins un élément de contact (18, 23) étant inséré à partir du côté opposé de la partie intérieure du boîtier recevant des piles rondes par des évidements (16, 28) dans le fond.

15. Procédé selon la revendication 12, **caractérisé en ce que** le au moins un élément de contact avec le fond de boîtier (9) est gaufré.
